# EUROPEAN PATENT SPECIFICATION

(11) **EP 2 960 643 B1**
(45) Date of publication and mention of the grant of the patent: **13.03.2019**
(21) Application number: 14425086.7
(22) Date of filing: 27.06.2014
(51) Int. Cl.: G01N 21/552, B60Q 1/00, B64D 47/06, G01N 21/958

(54) **System for monitoring a light transparent cover of a light or lamp, especially of an aircraft's external light**
System zur Überwachung einer lichtdurchlässigen Abdeckung einer Leuchte oder Lampe, insbesondere einer Flugzeugaußenleuchte
Système de surveillance d'un couvercle transparent à la lumière d'une lumière ou d'une lampe, en particulier d'une lumière extérieure d'un aéronef

(43) Date of publication of application: 30.12.2015
(73) Proprietor: Leonardo S.p.A., 00195 Roma (IT)
(72) Inventor: Barile, Giovanni, 52025 Montevarchi (IT); Vettori, Leonardo, 52025 Montevarchi (IT); Vanni, Paolo, 52025 Montevarchi (IT); Leone, Oreste, 52025 Montevarchi (IT)
(74) Representative: Bergadano, Mirko

(56) References cited:
- DE-A1-102004 032 047
- DE-B3- 10 358 199
- US-A1- 2011 018 439
- US-A1- 2013 249 375
- US-B1- 6 196 704

## Description

### TECHNICAL FIELD OF THE INVENTION

In general, the present invention relates to the monitoring of a light permeable cover of an external light of an aircraft (such as an aeroplane, a helicopter, etc.) to detect any damage in said light permeable cover.

In particular, the present invention concerns an aircraft's external light comprising a light permeable cover, and a system for monitoring integrity of said cover and for detecting any damage sustained by said cover.

### STATE OF THE ART

As is known, all aircrafts are equipped with external lights, which are designed to emit their light so as to fulfil specific requirements of avionics standards (such as, for example, MIL-L-006730, MIL-L-6503, and SAE ARP 693), and which constitute a complex system designed to make an optical signature of each aircraft. In fact, each aircraft is equipped with external lights designed to indicate almost each state of the aircraft and this function is directly related to safety because, if some of the external lights fail for whatever reason, the aircraft can be a danger for itself and for others.

Broadly speaking, external aircraft lights fall into two main categories:
- lights designed to illuminate the space around the aircraft to improve visibility for the pilot, such as landing lights; and
- warning lights for providing a visible warning of the aircraft's presence to observers both on the ground and in other aircrafts.

For example, aircrafts are obliged to mount:
- landing lights necessary during operations of take-off and landing, in particular in order to illuminate the runway during take-off and landing so that the pilots can visually assess the conditions of the runway; and
- position and anti-collision lights for improving visibility from other aircrafts during flight or on ground.

In particular, position and anti-collision lights have signaling functions for other aircrafts, for control tower operators, etc., for visual identification of the presence and/or of the direction of flight of the aircraft provided with said lights.

As for landing lights, European Patent Application EP 2 450 279 A1 discloses an example of LED lighting device for an aircraft, in particular for manoeuvres of landing, take-off, taxiing, and searching.

Furthermore, United States Patent Application US 2011/0261577 A1 discloses an example of warning lamp for an aircraft.

In general terms, an external light for an aircraft includes:
- a housing body designed to be mounted on an external surface of an aircraft;
- a domed, or cap-shaped, cover, which has a closed peripheral edge or rim fastened, or fixed, to the housing body and which is designed to be exposed to the external surrounding environment when the housing body is mounted on the aircraft's external surface; and
- a light-emitting device (for example based on Light Emitting Diode (LED) technology), which is fastened, or fixed, to the housing body and is protected from the external surrounding environment by the cover, is designed to emit light so as to fulfil specific requirements of avionics standards, and can conveniently comprise one or more reflectors and/or optical elements for appropriately shaping the emitted light.

The cover is permeable to the light emitted by the light-emitting device. Conveniently, the cover is transparent. For example, the cover can be made of polycarbonate.

A deterioration of cover's integrity, for example caused by weathering, can impair light permeability (or, conveniently, transparency) of the cover and, thence, information conveyed by the light.

Therefore, the integrity of a cover of an external light of an aircraft is a safety-critical parameter that should be monitored efficiently, reliably and constantly.

Nowadays, in order to check integrity of covers of external lights of an aircraft, human operators examine, from time to time and one by one, the covers of all the external lights searching for any damages. Evidently, this methodology is time-wasting, can be subject to errors because it relies on subjective assessments of human operators, and does not provide any quantification of detected damages, thereby proving to be neither efficient nor reliable.

Therefore, in avionics sector, for safety and maintenance reasons, there is markedly felt the need to develop a new methodology and/or system for constantly checking integrity of covers of external lights of an aircraft with increased efficiency and reliability.

Examples of devices for detecting soil on a light of a motor vehicle are known. For example, US 6 196 704 B1 discloses a light arrangement for a vehicle (especially for a tail light of a motor vehicle) that has a light source mounted in a reflector. A light disc is connected to the front end of the reflector in front of the light source. At least one emitter emitting a light signal and at least one receiver receiving the light signal are provided for detecting the degree of soiling of the light arrangement. The light signal travels through the light disc by total reflection to be then received by the receiver.

Another example related to automotive sector is provided also in DE 103 58 199 B3, which relates to a device for detecting fouling on object surfaces in Xenon headlamps for motor vehicles. In particular, the device according to DE 103 58 199 B3 has an optical element that conducts light waves and that is directly integrated into the surface of the object without a cover and with at least one coupling point for coupling light in and/or out of the optical element. The device has an aperture in the surface in which the optical element is arranged.

Additionally, DE 10 2004 032047 A1 provides an example of glass sheet inspection procedure for building applications. In particular, the glass sheet inspection procedure according to DE 10 2004 032047 A1 measures the light reflected from cracks and damage in a layer using light guided from a fluorescent source and light guiding or self illuminated layers in the glass.

### OBJECT AND SUMMARY OF THE INVENTION

The Applicant has decided to tackle the avionics sector's need for a new methodology and/or system for constantly checking integrity of covers of external lights of an aircraft with increased efficiency and reliability, and has, thus, carried out an in-depth study in order to develop such a methodology and/or system, thereby arriving at the present invention.

Therefore, a first object of the present invention is that of providing a methodology and/or system for constantly checking integrity of covers of external lights of an aircraft with increased efficiency and reliability.

Moreover, a second object of the present invention is that of providing a methodology and/or system for checking integrity of covers of external lights of an aircraft, which methodology/system permits maintenance operations to be simplified and sped up.

These and other objects are achieved by the present invention in so far as it relates to a system for monitoring light permeable covers of external lights of aircrafts, as defined in the appended claims.

### BRIEF DESCRIPTION OF THE DRAWINGS

For a better understanding of the present invention, preferred embodiments, which are intended purely by way of non-limiting example, will now be described with reference to the attached drawings (all not to scale), wherein:
- Figure 1 schematically illustrates a first light permeable cover for an aircraft's external light along with a monitoring system according to a preferred embodiment of the present invention for monitoring said first light permeable cover;
- Figure 2 schematically illustrates a second light permeable cover for an aircraft's external light, which second light permeable cover, while being different from the first light permeable cover of Figure 1, is coupled with the same monitoring system of Figure 1 to be monitored by the latter; and
- Figures 3-6 schematically illustrate results of experimental tests carried out by the Applicant on two different external light covers under perfect integrity conditions and under impaired integrity conditions.

### DETAILED DESCRIPTION OF PREFERRED EMBODIMENTS OF THE INVENTION

The present invention relates to a system for monitoring a light permeable cover of an external light of an aircraft (such as an airplane, a helicopter, etc.).

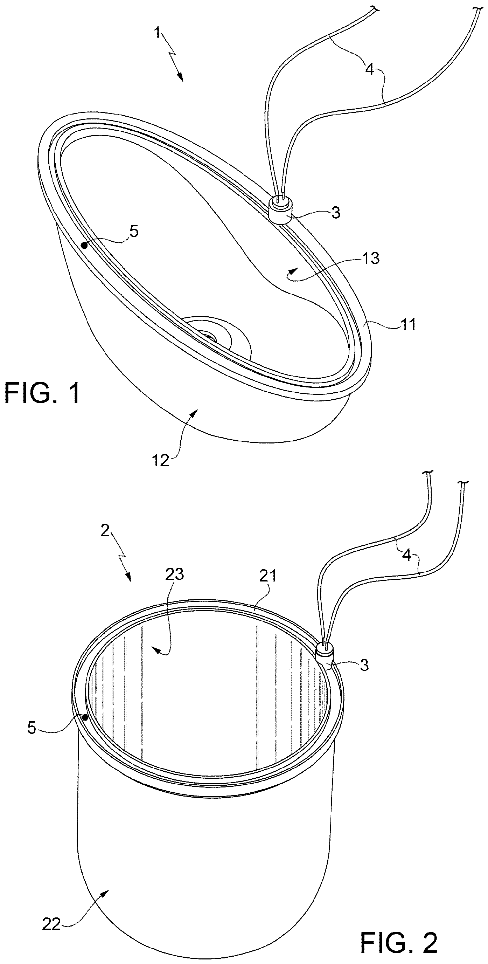

For a better understanding of the present invention, reference is made to Figures 1 and 2, which schematically show a monitoring system according to a preferred embodiment of the present invention, which monitoring system is designed to monitor:
- in the example shown in Figure 1, a first light permeable cover 1 of an external light or lamp of an aircraft; and
- in the example shown in Figure 2, a second light permeable cover 2 of an external light or lamp of an aircraft, which second light permeable cover 2 has a shape different from the one of the first light permeable cover 1.

In particular, the first light permeable cover 1 shown in Figure 1 is a domed or cap-shaped cover, specifically with a sort of egg-shell-like shape, while the second light permeable cover 2 shown in Figure 2 is a domed or cap-shaped cover, specifically with a sort of cup-like shape.

In detail, each of the covers 1 and 2 comprises:
- a respective closed peripheral rim or edge 11 or 21 designed to be fastened, or fixed, to an aircraft's external light or lamp (not shown in Figures 1 and 2 for the sake of illustration simplicity);
- a respective external surface 12 or 22 that, when the cover 1 or 2 is fastened/fixed to an aircraft's external light or lamp, is exposed to the external surrounding environment; and
- a respective internal surface 13 or 23 that, when the cover 1 or 2 is fastened/fixed to an aircraft's external light or lamp, faces a light-emitting device of said aircraft's external light.

Conveniently, the covers 1 and 2 are transparent and can be made of polycarbonate.

As shown in Figures 1 and 2, the monitoring system includes:
- a field source 3, which is
   - arranged at a respective position on the closed peripheral rim/edge 11 or 21,
   - is operable to emit a field through the closed peripheral rim/edge 11 or 21 inside the cover 1 or 2 between the external surface 12 or 22 and the internal surface 13 or 23 so that the emitted field propagates inside the cover 1 or 2 being guided by the latter, and
   - is conveniently connected to driving means 4 (which, in Figures 1 and 2, are represented in the form of wires) to be power-supplied and operated there through; and
- a sensor 5, which is
   - arranged at a respective position on the closed peripheral rim/edge 11 or 21, which respective position is different from the position occupied by the field source 3,
   - is designed to receive the field emitted by the field source 3 and propagated inside the cover 1 or 2 up to said sensor 5, and
   - is configured to measure intensity of the received field.

For the sake of clarity, it is worth noting that, during operation, the field is emitted by the field source 3 inside the cover 1 or 2 (i.e., inside the cover's body extending from the closed peripheral rim/edge 11 or 21 between the external surface 12 or 22 and the internal surface 13 or 23) and, thence, not in the hollow defined by the internal surface 13 or 23. In this way, the cover 1 or 2 acts as a "field guide" which guides the propagation of the field emitted by the field source 3 inside said cover 1 or 2.

Moreover, the monitoring system further includes detection means (not shown in Figures 1 and 2 for the sake of illustration simplicity) configured to check integrity of the cover 1 or 2 and to detect a damage affecting light permeability (or, conveniently, transparency) of said cover 1 or 2 on the basis of one or more field intensities measured by the sensor 5.

In particular, according to a first embodiment of the present invention, the sensor 5 and the detection means can be integrated into a first monitoring unit (not shown in Figures 1 and 2 for the sake of illustration simplicity), which further comprises wireless communication means (not shown in Figures 1 and 2 for the sake of illustration simplicity) configured to remotely communicate with a control device (not shown in Figures 1 and 2 for the sake of illustration simplicity) to wirelessly transmit to the latter data related to the field intensities measured by the sensor 5 and alarms related to the damages detected by the detection means.

Said control device can be a user terminal (for example, a hand-held, or portable, user terminal) designed to be used by a maintenance operator to retrieve from the monitoring unit the data related to the field intensities measured by the sensor 5 and the alarms related to the damages detected by the detection means, or it can be a central control device which is installed on board the aircraft and is configured to:
- collect, from each first monitoring unit according to the aforesaid first embodiment of the present invention coupled with a respective cover of an external light of the aircraft, the data related to the field intensities measured by the respective sensor 5 of said first monitoring unit and the alarms related to the damages detected by the respective detection means of said first monitoring unit; and
- wirelessly transmit all the collected data and alarms to a user terminal (for example, a hand-held, or portable, user terminal) designed to be used by a maintenance operator.

In other words, according to the aforesaid first embodiment of the present invention, the first monitoring unit, which includes both the sensor 5 and the detection means, is designed to perform the damage detection and to generate monitoring-related data (in particular, data related to the field intensities measured by the sensor 5 and alarms related to the damages detected by the detection means) and to transmit, by means of wireless communication means, said monitoring-related data to:
- a user terminal designed to be used by a maintenance operator; or
- a central control device installed on board the aircraft.

In this way, the damage detection is performed in a decentralized fashion (namely, for each monitored cover, the damage detection is performed by dedicated detection means of a corresponding first monitoring unit coupled with said monitored cover), and the monitoring-related data from all the first monitoring units installed on one and the same aircraft are:
- collected by a user terminal designed to be used by a maintenance operator; or
- collected by a central control device installed on board the aircraft and, when necessary, wirelessly transmitted from said central control device to a user terminal designed to be used by a maintenance operator.

Instead, according to a second embodiment of the present invention, the sensor 5 can be integrated along with wireless communication means into a second monitoring unit (which, in this case, does not comprise the detection means), wherein said wireless communication means are configured to wirelessly transmit data related to the field intensities measured by the sensor 5 to:
- a user terminal (for example, a hand-held, or portable, user terminal), which is designed to be used by a maintenance operator and comprises the detection means; or
- a central control device, which is installed on board the aircraft, comprises the detection means, and is further configured to wirelessly transmit the collected data and also alarms related to damages detected by the detection means to a user terminal (for example, a hand-held, or portable, user terminal) designed to be used by a maintenance operator.

In other words, according to the aforesaid second embodiment of the present invention, the damage detection is performed in a centralized fashion (namely, for all the monitored covers, the damage detection is performed by a single detection device) by means of:
- a user terminal, which is designed to be used by a maintenance operator and comprises said single detection device; or
- a central control device, which is installed on board the aircraft, comprises said single detection device, and is configured to, when necessary, wirelessly transmit to a user terminal designed to be used by a maintenance operator
   - the data related to the field intensities measured by the sensors 5 of all the second monitoring units installed on the aircraft, and
   - also alarms related to damages detected by the single detection device.

Conveniently, in either one of the aforesaid first and second embodiments, the wireless communications between the first/second monitoring unit(s) and the user terminal or the central control device, and between the central control device and the user terminal can be based on one or more wireless communication technologies, such as Bluetooth technology, Radio Frequency Identification (RFID) technology, and/or one or more wireless communication technologies for mobile phones and data terminals (based, for example, on one or more of the following standards: GSM, GPRS, EDGE, UMTS, HSPA, and LTE).

In the following some aspects and features of the monitoring system according to the present invention will be described in detail, which aspects and features are applicable to both the aforesaid first and second embodiments.

Conveniently, the detection means are configured to:
- store reference data indicative of one or more reference conditions of integrity of the cover 1 or 2; and
- check integrity of the covers 1 or 2 and detect a damage in said cover 1 or 2 by comparing the field intensities measured by the sensor 5 with the reference data.

More conveniently, the reference data stored by the detection means can be indicative of:
1) one or more field intensities measured by the sensor 5 under perfect integrity conditions of the cover 1 or 2, namely when said cover 1 or 2 has never sustained a damage; and/or
2) one or more field intensities measured by the sensor 5 under admissible integrity conditions of the cover 1 or 2, namely when said cover 1 or 2 has sustained one or more damages which does/do not strongly impair light permeability (or, conveniently, transparency) of said cover 1 or 2; and/or
3) one or more thresholds computed on the basis of the field intensity measurements specified at the preceding points 1) and/or 2).

Alternatively, the detection means can comprise a classifier, which is trained on the basis of the field intensity measurements specified at the preceding points 1) and/or 2) (i.e., intensity measurements performed when said cover 1 or 2 has never sustained a damage and/or has sustained one or more damages which does/do not strongly impair light permeability (or, conveniently, transparency) of said cover 1 or 2) to detect a damage in said cover 1 or 2.

As for arrangement of the field source 3 and of the sensor 5, it is worth noting that, as shown in Figure 1, the closed peripheral rim 11 of the cover 1 lies on a plane where substantially defines an ellipse, and the field source 3 and the sensor 5 are arranged, each, at a respective end of the minor axis of said ellipse.

Instead, as shown in Figure 2, the closed peripheral rim 21 of the cover 2 lies on a plane where substantially defines a circumference/circle, and the field source 3 and the sensor 5 are arranged, each, at a respective end of one and the same diameter of said circumference/circle.

Therefore, in more general terms, the closed peripheral rim can be symmetrical with respect to an axis of symmetry (major/minor axis of the ellipse-shaped rim 11 and any diameter of the circumference/circle-shaped rim 21), whereby the field source 3 and the sensor 5 are arranged on the closed peripheral rim at positions that are substantially symmetrical with respect to said axis of symmetry. Otherwise, if the closed peripheral rim does not lie on a single plane, the closed peripheral rim is symmetrical with respect to a plane of symmetry, whereby the field source 3 and the sensor 5 are arranged on the closed peripheral rim at positions that are substantially symmetrical with respect to said plane of symmetry.

The field source 3 is a light source (for example based on LED technology) configured to emit an electromagnetic field or radiation with wavelength comprised in the visible or infrared range; accordingly, the sensor 5 is a photosensor or photodetector (for example a photodiode) configured to measure intensity of the electromagnetic field/radiation emitted by the light source 3 and propagated inside the cover 1 or 2 up to said photosensor/photodetector 5.

In other words, the present invention advantageously exploits guiding properties of spatial curvature (geodesic) of the cover 1 or 2 and its material dispersion properties. In fact, the cover 1 or 2 is designed to guide the visible/infrared light radiation emitted by the light source 3 to geometrically-defined points with an intensity that depends on the integrity state of said cover 1 or 2. As is known, the guiding properties of the spatial curvature of a surface of a volume can be obtained either by a differential curvature change with constant refractive index, or by a constant curvature with variable refractive index.

Therefore, a reduction in the intensity measured by the sensor 5 with respect to the reference data is directly related to a deterioration of the integrity of the cover 1 or 2 (for example due to one or more damages sustained by said cover 1 or 2) and, thence, to a reduction in the light permeability (or, conveniently, in the transparency) of said cover 1 or 2.

Since there is a correlation among the wavelength of the field emitted by the field source 3, the arrangement of the field source 3 and of the sensor 5, and the spatial curvature of the cover 1 or 2, all these elements can be conveniently optimized, by means of an optical simulation, for enhancing sensitivity and accuracy of the sensor 5 and of the detection means.

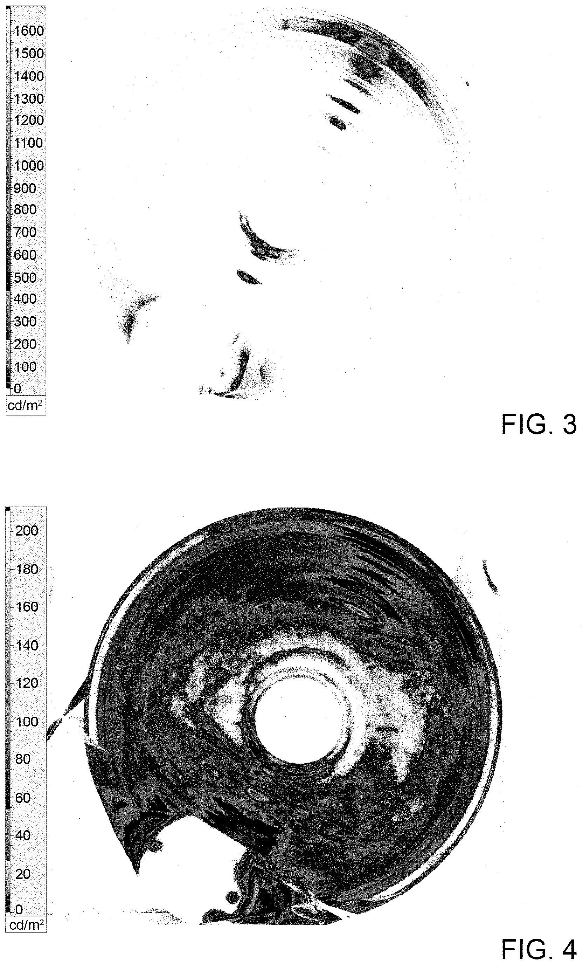

The Applicant has carried out several experimental simulations and tests in order to evaluate performance, efficiency and reliability of the monitoring system according to the present invention. Results of some of the experimental simulations and tests carried out by the Applicant are presented in Figures 3-6.

In particular, Figures 3-6 show the results of tests performed on two different external light covers under perfect integrity conditions (i.e., when the two covers have no damage) and under impaired integrity conditions (i.e., when the two covers are damaged, specifically they are scratched).

In detail, Figures 3 and 4 shows the results of experimental tests carried out, respectively, on a cylindrical, perfectly transparent cover without any damage, and on the same cover damaged by scratches. Said tests were performed by:
- using a field source 3 in the form of a light source and a sensor 5 in the form of a photosensor;
- arranging the light source at the bottom left region shown in Figures 3 and 4, and the photosensor at the upper right region shown in Figures 3 and 4; and
- capturing the light emitted by the light source and propagating inside the cover under test by means of a CCD camera,_i.e., a camera based on Charge-Coupled Device (CCD) technology.

From- Figure 3 it can be seen that the light is substantially concentrated in the region where the photosensor is arranged (i.e., upper right region shown in Figure 3), while from Figure 4 it can be seen that the light is scattered substantially from all the scratched cover under test thereby reducing light intensity measurable/measured by the photosensor.

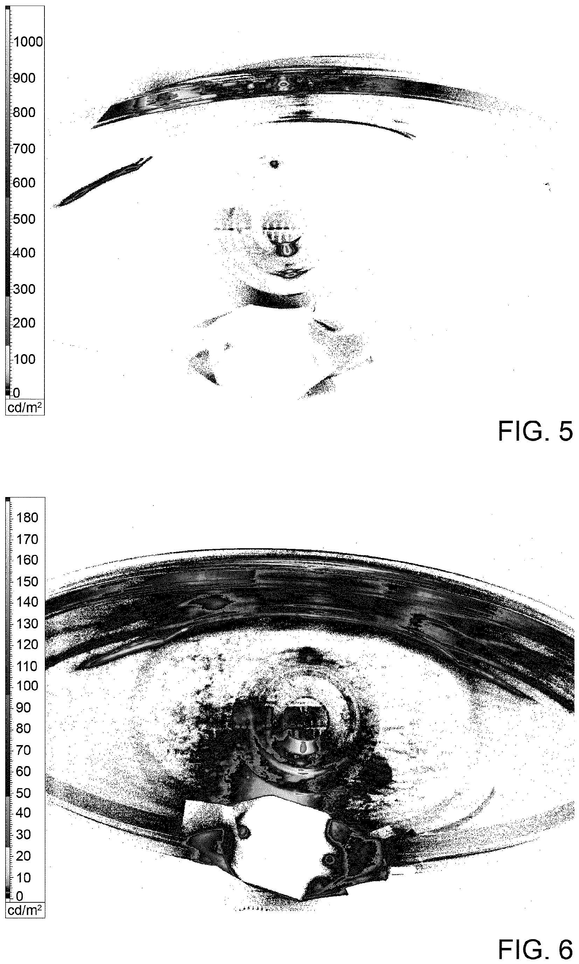

Moreover, Figures 5 and 6 shows the results of experimental tests carried out, respectively, on a ellipsoidal, perfectly transparent cover without any damage, and on the same cover damaged by scratches. Said tests were performed by:
- again using a field source 3 in the form of a light source and a sensor 5 in the form of a photosensor;
- arranging the light source at the bottom region shown in Figures 5 and 6, and the photosensor at the upper region shown in Figures 5 and 6; and
- again capturing the light emitted by the light source and propagating inside the cover under test by means of a CCD camera.

From Figure 5 it can be seen that the light is substantially concentrated in the region where the photosensor is arranged (i.e., upper region shown in Figure 5), while from Figure 6 it can be seen that the light is scattered substantially from all the scratched cover under test thereby reducing light intensity measurable/measured by the photosensor.

The results shown in Figures 3-6 confirm that:
- the amount of field intensity measured by the sensor 5 (in particular, in the examples shown in Figures 3-6, the amount of light intensity measured by the photosensor) is directly related to the integrity state of the monitored cover and, accordingly, to the light permeability (in particular, the transparency) of said cover; and, thence,
- a reduction in light permeability (in particular, a loss of transparency) of the monitored cover (for example, due to damages) results in a corresponding reduction in the field intensity measured by the sensor 5 (in particular, in the examples shown in Figures 3-6, a corresponding reduction in the light intensity measured by the photosensor).

Therefore, the monitoring system according to the present invention enables:
- light permeability (or, conveniently, transparency) of an external cover of a light or lamp to be monitored and objectively quantified; and
- a reduction in light permeability (or, conveniently, transparency) to be detected and, again, objectively quantified.

From the foregoing, technical advantages of the present invention are immediately clear.

In particular, it is worth noting that the monitoring system according to the present invention enables a constant monitoring and checking of integrity and, thence, of light permeability (or, conveniently, transparency) of an external cover of a light or lamp to be carried out with an efficiency and a reliability increased with respect to the ones of the current monitoring and checking methodologies based on subjective assessments of human operators.

Moreover, it is important to stress the fact that the monitoring system according to the present invention invention enables light permeability (or, conveniently, transparency) to be monitored and objectively quantified, and any reduction in light permeability (or, conveniently, transparency) to be detected and objectively quantified.

Therefore, with specific reference to the avionics sector, the monitoring system according to the present invention enables the safety-critical parameter represented by the integrity/light-permeability/transparency of a cover of an aircraft's external light to be monitored efficiently, reliably and constantly, thereby meeting the more and more demanding avionics requirements concerning safety and maintenance.

Moreover, the monitoring system according to the present invention enables monitoring-related data to be wirelessly transmitted to maintenance teams, thereby achieving a time-saving, cost-saving, simplified and precise monitoring of the covers of the external lights of an aircraft and, thence, improving safety.

The monitoring system according to the present invention works very well with excellent sensitivity and accuracy. In fact, an abrasion equivalent to a loss of about 50% of transparency reduces the measured field intensity by about one order of magnitude.

Additionally, the monitoring system according to the present invention exploits a field source and a sensor directly arranged on, or embedded in, the cover to be monitored, thereby resulting in an extremely compact and sound system architecture.

Finally, the present invention provides also an economic advantage. In fact, new external lights for aircrafts can be manufactured by embedding in said lights the monitoring system according to the present invention, thereby obtaining high added-value products to be sold.

## Claims

1. System for monitoring light permeable covers of external lights of aircrafts, including an external light for an aircraft and a monitoring system;
wherein the external light comprises:
• a housing body designed to be mounted on an external surface of the aircraft;
• a light-emitting device fixed to the housing body; and
• a domed, light permeable cover (1;2), which includes
- a closed peripheral rim (11;21) fixed to the housing body,
- an external surface (12;22) exposed to an external surrounding environment, and
- an internal surface (13;23) facing the light-emitting device;
wherein the monitoring system comprises:
• a light source (3), which is arranged at a first position on the closed peripheral rim (11;21) of the domed, light permeable cover (1;2), and which is configured to emit, between the internal (13;23) and external (12;22) surfaces of the domed, light permeable cover (1;2), an electromagnetic field with wavelength comprised in the visible or infrared range, so that the emitted electromagnetic field propagates inside said domed, light permeable cover (1;2) being guided by the latter;
• a sensor (5), which is arranged at a second position on the closed peripheral rim (11;21) of the domed, light permeable cover (1;2), and which is configured to
- receive the electromagnetic field emitted by the light source (3) and propagated inside the domed, light permeable cover (1;2) up to said sensor (5) and
- measure intensity of the received electromagnetic field;
• detection means configured to check integrity of the domed, light permeable cover (1;2) and to detect a damage affecting light permeability of said cover (1;2) on the basis of
- one or more electromagnetic field intensities measured by the sensor (5) and
- reference data indicative of one or more reference conditions of integrity of the domed, light permeable cover (1;2); and
• a control device;
wherein the closed peripheral rim (11;21) of the domed, light permeable cover (1;2) is symmetrical with respect to an axis or plane of symmetry;
wherein the first and second positions are symmetrical with respect to said axis or plane of symmetry;
wherein the sensor (5) is integrated, along with wireless communication means, into a monitoring unit, which is configured to wirelessly transmit to the control device, by means of said wireless communication means, monitoring-related data indicative of one or more electromagnetic field intensities measured by the sensor (5);
wherein the control device is:
• a user terminal designed to be used by a maintenance operator; or
• a central control device, which is designed to
- be installed on board the aircraft,
- collect monitoring-related data from one or more monitoring units, and
- wirelessly transmit the collected data to a user terminal designed to be used by a maintenance operator;
and wherein the detection means are integrated into:
• the monitoring unit and wherein, if the detection means detect a damage, the monitoring-related data transmitted by said monitoring unit to the control device are also indicative of an alarm related to said detected damage; or
• the control device to check integrity of the domed, light permeable cover (1;2) and to detect a damage affecting light permeability of said cover (1;2) on the basis of the monitoring-related data received from the monitoring unit.

2. The system of claim 1, wherein the reference data are indicative of at least one electromagnetic field intensity measured by the sensor (5) under at least one reference condition of integrity of the domed, light permeable cover (1;2).

3. The system of claim 1, wherein the reference data are indicative of electromagnetic field intensities measured by the sensor (5) under different reference conditions of integrity of the domed, light permeable cover (1;2).

4. The system of claim 1, wherein the reference data comprise at least one threshold computed on the basis of at least one electromagnetic field intensity measured by the sensor (5) under at least one reference condition of integrity of the domed, light permeable cover (1;2).

5. The system of claim 1, wherein the reference data comprise one or more thresholds computed on the basis of electromagnetic field intensities measured by the sensor (5) under different reference conditions of integrity of the domed, light permeable cover (1;2).

6. The system according to any preceding claim, wherein the detection means are configured to:
• store the reference data; and
• check integrity of the domed, light permeable cover (1;2) and detect a damage affecting light permeability of said cover (1;2) by comparing an electromagnetic field intensity measured by the sensor (5) with the stored reference data.

7. The system according to any claim 1-3, wherein the detection means comprise a classifier, which is trained on the basis of the reference data to detect a damage affecting light permeability of the domed, light permeable cover (1;2).

8. Aircraft equipped with the system as claimed in any preceding claim.

## Patentansprüche

1. System zum Überwachen von lichtdurchlässigen Abdeckungen der Außenlichter von Flugzeugen, einschließlich eines Außenlichts für ein Flugzeug und ein Überwachungssystem;
wobei das Außenlicht umfasst:
• einen Gehäusekörper, ausgebildet, um an bzw. auf einer Außenfläche des Flugzeugs angebracht zu werden;
• eine lichtemittierende Vorrichtung, befestigt an dem Gehäusekörper; und
• eine gewölbte, lichtdurchlässige Abdeckung (1; 2), die beinhaltet
- einen geschlossenen Umfangsrand (11; 21), befestigt an dem Gehäusekörper,
- eine Außenfläche (12; 22), die einer äußeren Umgebung ausgesetzt ist, und
- eine Innenfläche (13; 23), die der lichtemittierenden Vorrichtung zugewandt ist;
wobei das Überwachungssystem umfasst:
• eine Lichtquelle (3), die an einer ersten Position an bzw. auf dem geschlossenen Umfangsrand (11; 21) der gewölbten, lichtdurchlässigen Abdeckung (1; 2) angeordnet ist, und die konfiguriert ist, um zwischen der Innen- (13; 23) und der Außen- (12; 22) Fläche der gewölbten, lichtdurchlässigen Abdeckung (1; 2) ein elektromagnetisches Feld zu emittieren mit Wellenlängen, die im sichtbaren oder Infrarot-Bereich umfasst sind, so dass das emittierte elektromagnetische Feld sich ausbreitet innerhalb der gewölbten, lichtdurchlässigen Abdeckung (1; 2), geführt bzw. geleitet durch diese;
• einen Sensor (5), der an einer zweiten Position an bzw. auf dem geschlossenen Umfangsrand (11; 21) der gewölbten, lichtdurchlässigen Abdeckung (1; 2) angeordnet ist, und der konfiguriert ist, um
- das durch die Lichtquelle (3) emittierte und innerhalb der gewölbten, lichtdurchlässigen Abdeckung (1; 2) bis zu dem Sensor (5) ausgebreitete elektromagnetische Feld zu empfangen und
- eine Intensität des empfangenen elektromagnetischen Felds zu messen;
• Erfassungsmittel, ausgelegt, um die Unversehrtheit der gewölbten, lichtdurchlässigen Abdeckung (1; 2) zu prüfen und einen Schaden, der die Lichtdurchlässigkeit der Abdeckung (1; 2) beeinträchtigt, zu erfassen auf der Grundlage
- einer oder mehrerer durch den Sensor (5) gemessenen elektromagnetischen Feldintensitäten und
- von Referenzdaten, anzeigend eine oder mehrere Referenzbedingungen der Unversehrtheit der gewölbten, lichtdurchlässigen Abdeckung (1; 2); und
• eine Regel- oder Steuervorrichtung;
wobei der geschlossene Umfangsrand (11; 21) der gewölbten, lichtdurchlässigen Abdeckung (1; 2) symmetrisch in Bezug auf eine Symmetrieachse oder -ebene ist;
wobei die erste und zweite Position symmetrisch in Bezug auf die Symmetrieachse oder -ebene sind;
wobei der Sensor (5), zusammen mit drahtlosen Kommunikationsmitteln, in eine Überwachungseinheit integriert ist, die konfiguriert ist, um drahtlos an die Regel- oder Steuervorrichtung mittels der drahtlosen Kommunikationsmittel überwachungsbezogene Daten, die eine oder mehrere durch den Sensor (5) gemessene elektromagnetische Feldintensitäten anzeigen, zu übertragen;
wobei die Regel- oder Steuervorrichtung ist:
• ein Benutzerterminal, ausgestaltet, um durch einen Wartungsbediener genutzt zu werden; oder
• eine zentrale Regel- oder Steuervorrichtung, die ausgestaltet ist, um
- an Bord des Flugzeugs eingebaut zu werden,
- überwachungsbezogene Daten aus einer oder mehreren Überwachungseinheiten zu sammeln, und
- drahtlos die gesammelten Daten an ein Benutzerterminal, das ausgestaltet ist, um durch einen Wartungsbediener genutzt zu werden, zu übertragen;
und wobei die Erfassungsmittel integriert sind in:
• die Überwachungseinheit und wobei, wenn die Erfassungsmittel einen Schaden erfassen, die durch die Überwachungseinheit an die Regel- oder Steuervorrichtung übertragenen überwachungsbezogenen Daten ebenso einen Alarm zugehörig zu dem erfassten Schaden anzeigen; oder
• die Regel- oder Steuervorrichtung, um die Unversehrtheit der gewölbten, lichtdurchlässigen Abdeckung (1; 2) zu prüfen und einen Schaden, der die Lichtdurchlässigkeit der Abdeckung (1; 2) beeinträchtigt, zu erfassen auf der Grundlage der überwachungsbezogenen Daten, die von der Überwachungseinheit empfangen wurden.

2. System nach Anspruch 1, wobei die Referenzdaten mindestens eine elektromagnetische Feldintensität gemessen durch den Sensor (5) unter mindestens einer Referenz-Unversehrtheitsbedingung der gewölbten, lichtdurchlässigen Abdeckung (1; 2) anzeigen.

3. System nach Anspruch 1, wobei die elektromagnetische Feldintensitäten gemessen durch den Sensor (5) unter verschiedenen Referenz-Unversehrtheitsbedingungen der gewölbten, lichtdurchlässigen Abdeckung (1; 2) anzeigen.

4. System nach Anspruch 1, wobei die Referenzdaten mindestens einen Grenzwert umfassen, berechnet auf der Grundlage mindestens einer elektromagnetischen Feldintensität gemessen durch den Sensor (5) unter mindestens einer Referenz-Unversehrtheitsbedingung der gewölbten, lichtdurchlässigen Abdeckung (1; 2).

5. System nach Anspruch 1, wobei die Referenzdaten einen oder mehrere Grenzwerte umfassen, berechnet auf der Grundlage elektromagnetischer Feldintensitäten gemessen durch den Sensor (5) unter verschiedenen Referenz-Unversehrtheitsbedingungen der gewölbten, lichtdurchlässigen Abdeckung (1; 2).

6. System nach einem der vorangehenden Ansprüche, wobei die Erfassungsmittel konfiguriert sind, um:
• Referenzdaten zu speichern; und
• die Unversehrtheit der gewölbten, lichtdurchlässigen Abdeckung (1; 2) zu prüfen und einen Schaden, der die Lichtdurchlässigkeit der Abdeckung (1; 2) beeinträchtigt, zu erfassen, indem eine elektromagnetischen Feldintensität gemessen durch den Sensor (5) mit den gespeicherten Referenzdaten abgeglichen wird.

7. System nach einem der Ansprüche 1-3, wobei die Erfassungsmittel einen Klassierer umfassen, der auf der Grundlage der Referenzdaten darin geschult wird, einen Schaden, der die Lichtdurchlässigkeit der gewölbten, lichtdurchlässigen Abdeckung (1; 2) beeinträchtigt, zu erfassen.

8. Flugzeug ausgestattet mit dem System nach einem der vorangehenden Ansprüche.

## Revendications

1. Système de surveillance de couvercles perméables à la lumière de lumières extérieures d'aéronefs, incluant une lumière extérieure pour un aéronef et un système de surveillance ;
dans lequel la lumière extérieure comprend :
• un corps de boîtier conçu pour être monté sur une surface extérieure de l'aéronef ;
• un dispositif électroluminescent fixé au corps de boîtier ; et
• un couvercle perméable à la lumière en forme de dôme (1 ; 2), qui inclut
- un rebord périphérique fermé (11 ; 21) fixé au corps de boîtier,
- une surface extérieure (12 ; 22) exposée à un environnement ambiant extérieur, et
- une surface intérieure (13 ; 23) faisant face au dispositif électroluminescent ;
dans lequel le système de surveillance comprend :
• une source de lumière (3), qui est agencée au niveau d'une première position sur le rebord périphérique fermé (11 ; 21) du couvercle perméable à la lumière en forme de dôme (1; 2), et qui est configurée pour émettre, entre les surfaces intérieure (13; 23) et extérieure (12 ; 22) du couvercle perméable à la lumière en forme de dôme (1 ; 2), un champ électromagnétique ayant une longueur d'onde comprise dans la plage du visible ou de l'infrarouge, de sorte que le champ électromagnétique émis se propage à l'intérieur dudit couvercle perméable à la lumière en forme de dôme (1 ; 2) en étant guidé par ce dernier ;
• un capteur (5), qui est agencé au niveau d'une seconde position sur le rebord périphérique fermé (11 ; 21) du couvercle perméable à la lumière en forme de dôme (1 ; 2), et qui est configuré pour
- recevoir le champ électromagnétique émis par la source de lumière (3) et propagé à l'intérieur du couvercle perméable à la lumière en forme de dôme (1 ; 2) jusqu'audit capteur (5) et
- mesurer une intensité du champ électromagnétique reçu ;
• des moyens de détection configurée pour vérifier l'intégrité du couvercle perméable à la lumière en forme de dôme (1; 2) et pour détecter un dommage affectant la perméabilité à la lumière dudit couvercle (1 ; 2) sur la base de
- une ou plusieurs intensités de champ électromagnétique mesurées par le capteur (5) et
- des données de référence indicatrices d'une ou plusieurs conditions de référence de l'intégrité du couvercle perméable à la lumière en forme de dôme (1 ; 2) ; et
• un dispositif de commande ;
dans lequel le rebord périphérique fermé (11 ; 21) du couvercle perméable à la lumière en forme de dôme (1 ; 2) est symétrique par rapport à un axe ou plan de symétrie ;
dans lequel les première et seconde positions sont symétriques par rapport audit axe ou plan de symétrie ;
dans lequel le capteur (5) est intégré, conjointement avec des moyens de communication sans fil, dans une unité de surveillance, qui est configurée pour transmettre sans fil au dispositif de commande, au moyen desdits moyens de communication sans fil, des données relatives à la surveillance indicatrices d'une ou plusieurs intensités de champ électromagnétique mesurées par le capteur (5) ;
dans lequel le dispositif de commande est :
• un terminal utilisateur conçu pour être utilisé par un opérateur de maintenance ; ou
• un dispositif de commande central, qui est conçu pour
- être installé à bord de l'aéronef,
- collecter des données relatives à la surveillance à partir d'une ou plusieurs unités de surveillance, et
- transmettre sans fil les données collectées à un terminal utilisateur conçu pour être utilisé par un opérateur de maintenance ;
et dans lequel les moyens de détection sont intégrés dans :
• l'unité de surveillance et dans lequel, si les moyens de détection détectent un dommage, les données relatives à la surveillance transmises par ladite unité de surveillance au dispositif de commande sont également indicatrices d'une alarme relative audit dommage détecté ; ou
• le dispositif de commande pour vérifier l'intégrité du couvercle perméable à la lumière en forme de dôme (1; 2) et pour détecter un dommage affectant la perméabilité à la lumière dudit couvercle (1 ; 2) sur la base des données relatives à la surveillance reçues à partir de l'unité de surveillance.

2. Système selon la revendication 1, dans lequel les données de référence sont indicatrices d'au moins une intensité de champ électromagnétique mesurée par le capteur (5) sous au moins une condition de référence d'intégrité du couvercle perméable à la lumière en forme de dôme (1 ; 2).

3. Système selon la revendication 1, dans lequel les données de référence sont indicatrices d'intensités de champ électromagnétique mesurées par le capteur (5) sous différentes conditions de référence d'intégrité du couvercle perméable à la lumière en forme de dôme (1 ; 2) .

4. Système selon la revendication 1, dans lequel les données de référence comprennent au moins un seuil calculé sur la base d'au moins une intensité de champ électromagnétique mesurée par le capteur (5) sous au moins une condition de référence de l'intégrité du couvercle perméable à la lumière en forme de dôme (1 ; 2) .

5. Système selon la revendication 1, dans lequel les données de référence comprennent un ou plusieurs seuils calculés sur la base d'intensités de champ électromagnétique mesurées par le capteur (5) sous différentes conditions de référence d'intégrité du couvercle perméable à la lumière en forme de dôme (1 ; 2) .

6. Système selon l'une quelconque des revendications précédentes, dans lequel les moyens de détection sont configurés pour :
• stocker les données de référence ; et
• vérifier l'intégrité du couvercle perméable à la lumière en forme de dôme (1 ; 2) et détecter un dommage affectant la perméabilité à la lumière dudit couvercle (1 ; 2) en comparant une intensité de champ électromagnétique mesurée par le capteur (5) aux données de référence stockées.

7. Système selon l'une quelconque des revendications 1 à 3, dans lequel les moyens de détection comprennent un classifieur, qui est entraîné sur la base des données de référence à détecter un dommage affectant la perméabilité à la lumière du couvercle perméable à la lumière en forme de dôme (1 ; 2) .

8. Aéronef équipé du système selon l'une quelconque des revendications précédentes.
